# FASCICULE DE BREVET EUROPEEN

(11) **EP 0 447 974 B1**
(45) Date de publication et mention de la délivrance du brevet: **20.07.1994**
(21) Numéro de dépôt: 91103998.0
(22) Date de dépôt: 15.03.1991
(51) Int. Cl.: G01P 13/02, B64D 43/02

(54) **Dispositif de mesure d'angle et utilisation de celui-ci**
Winkelmesseinrichtung und Verwendung derselben
Angle measuring device and the use thereof

(30) Priorité: 21.03.1990 CH 933/90
(43) Date de publication de la demande: 25.09.1991
(73) Titulaire: Osen, Karl, 1282 Dardagny (CH)
(72) Inventeur: Osen, Karl, 1282 Dardagny (CH)
(74) Mandataire: Reverdin, André Pierre

(56) Documents cités:
- US-A- 2 630 987
- US-A- 4 230 290
- US-A- 4 541 591

## Description

La présente invention concerne un dispositif de mesure d'angle, comme décrit dans le préambule de la revendication 1, notamment pour optimisation du rapport portance/traînée d'un engin mobile dans un fluide, et plus particulièrement d'un aéronef dans l'air, ainsi que pour la mesure des conditions d'écoulement de l'air autour d'un engin en soufflerie.

Des dispositifs mesurant l'angle d'attaque sont connus et utilisés sur des avions: ils sont parfois disposés sur l'extrémité avant du nez de l'avion, pour ne pas être affectés par les perturbations générées par la pénétration de l'engin dans la masse fluide, ou plus souvent sur le côté extérieur du flanc de l'avion en transmettant l'information à un récepteur fixé à l'intérieur de l'avion. De tels capteurs sont décrits par exemple dans le brevet US 4,230,290.
La connaissance de l'angle d'attaque permet de mieux contrôler la portance de l'avion, et notamment d'éviter des décrochages dangereux.

Cependant les dispositifs connus, même s'ils permettent de déterminer l'angle d'attaque avec une bonne précision, n'adressent pas le problème de fond de l'optimisation des conditions de déplacement d'un engin dans un fluide, et plus particulièrement des conditions de vol d'un aéronef dans l'air, qui consiste à mesurer et contrôler l'angle entre la direction du déplacement effectif de l'engin par rapport à la masse de fluide, qu'on appellera ci-après vecteur vitesse apparente conformément à l'usage, et la résultante de la portance, de la traînée et, dans le cas d'un engin motorisé, de la poussée, avec la plus grande précision possible. La direction de la résultante de ces forces s'exerçant sur l'engin, à l'exception de la force de gravitation terrestre, est celle que prendrait un fil à plomb ou pendule hypothétique suspendu au plafond d'un habitacle dans l'engin. On l'appellera dans la suite et dans les revendications la direction apparente de la pesanteur. Un observateur embarqué dans l'habitacle pourrait mesurer l'angle que ferait ce fil à plomb avec un axe lié à l'engin, mais il lui est difficile de mesurer l'angle qui est primordial pour l'optimisation, c'est-à-dire l'angle que ferait ce fil avec le vecteur vitesse, c'est-à-dire avec la direction du vent apparent dans le cas d'un aéronef.

Le problème à résoudre est donc de proposer un dispositif qui mesure directement, et avec une grande exactitude, cet angle entre la direction apparente de la pesanteur et le vecteur vitesse de l'engin par rapport au fluide.

Dans le cas d'une soufflerie, la phase de tests d'une forme d'aéronef comporte la représentation des écoulements d'air dans un maximum de points du tunnel de soufflerie, avec en tout premier lieu la détermination de la direction du vent apparent, compte tenu des perturbations engendrées au voisinage de la forme d'aéronef. Là aussi, l'angle entre cette direction et la verticale au point de mesure est primordial.

L'invention se propose de fournir un dispositif capable de mesurer de tels angles, par les moyens décrits dans la partie caractérisante de la revendication 1.

Dans une réalisation avantageuse de l'invention, on utilise au moins un clinomètre consistant en un niveau à bulle de gaz ou d'air. Cette réalisation, compte tenu des niveaux à bulle d'air couramment disponibles, présente l'avantage de se contenter de dimensions très réduites, tout en offrant la précision nécessaire. Cette précision étant en général une fonction inverse de la plage de mesure du clinomètre considéré, il peut être souhaitable d'utiliser plus d'un clinomètre, pour mesurer aussi bien des angles fortement variables que des angles faiblement variables; pour ces derniers l'invention permet, après étalonnage, une précision de mesure allant jusqu'à la demi-seconde d'arc, c'est-à-dire le sept mille deux centième de degré. Cette précision est obtenue grâce à la présence d'un électrolyte liquide dans le niveau à bulle, ce qui fait que le moindre déplacement de la bulle entraîne une modification perceptible de la résistance électrique de l'électrolyte.

Dans une autre réalisation de l'invention, on peut utiliser comme clinomètre un ou plusieurs accéléromètres dont la combinaison permet aussi de déduire la direction de l'accélération résultante à laquelle est soumis l'organe de mesure.

Dans une réalisation avantageuse de l'invention, on donne au dispositif une forme aérodynamique lui permettant de trouver immédiatement et en toute circonstance la position qui d'une part annule le moment résultant autour de l'axe de rotation et où d'autre part le dispositif est aérodynamiquement stable. Ceci est obtenu, compte tenu de la contrainte selon laquelle son centre de gravité doit être porté par l'axe de rotation, par exemple par une paire d'ailettes.

Dans une autre réalisation de l'invention, le support du dispositif est placé sur un engin mobile dans un fluide, en une position peu perturbée par les influences causées par le mouvement de la masse de fluide sur l'enveloppe de l'engin, ou en une position où ces influences sont connues. Cet endroit peut être notamment l'extrémité avant ou nez de l'engin, ou encore le bord d'attaque d'une aile dans le cas d'un aéronef, ou son extrémité.

Dans une autre réalisation de l'invention, le support est muni d'un mécanisme qui en aligne, même approximativement, la direction sur celle du vecteur vitesse. De cette manière, on obtient les meilleures conditions de fonctionnement du dispositif, qui sont réalisées lorsque l'angle entre le support et le vecteur vitesse est faible; en effet ceci évite au maximum les influences qui sont causées par le support sur le fluide environnant le dispositif. De plus, le dispositif doit tourner librement , avec un frottement minimal, autour de son axe de rotation, ce qui est réalisé au mieux lorsque la direction du support est orthogonale à la direction du fluide, ainsi qu'à la direction apparente de la pesanteur. Ce mécanisme peut être par exemple, dans le cas d'un aéronef, un asservissement qui maintient le support dans une direction parallèle au vent apparent même en cas de virage, et plus généralement dans toutes les situations transitoires où le support n'est plus face au vent apparent, avec un temps de réponse amélioré. Cette amélioration du temps de réponse minimise le temps pendant lequel la mesure est perturbée.

D'autres réalisations avantageuses de l'invention ont comme but de minimiser les efforts de friction entre l'organe de mesure et le support: l'axe de rotation du dispositif est matérialisé par au moins un roulement, ou par un palier sans contact, par exemple au moyen d'un coussin de fluide ou d'un système d'asservissement magnétique. De telles réalisations peuvent être nécessaires pour réduire au minimum les frottements sur l'axe et obtenir ainsi la plus grande précision dans la mesure de l'angle.

Le dispositif fait appel à une source d'énergie, notamment électrique, pour son fonctionnement. Cette source d'énergie peut être incorporée au dispositif, comme par exemple une pile de dimensions adaptées, ou des capteurs solaires situés par exemple sur les ailettes. Elle peut aussi être embarquée à bord de l'engin, l'énergie pouvant alors être transmise au dispositif par différents moyens, notamment électromagnétiques comme par exemple une source de lumière véhiculée par fibres optiques, ou un rayonnement laser, ou un transformateur dont un enroulement primaire est alimenté par des moyens situés dans l'engin, et un enroulement secondaire est porté par le dispositif, ou électriques classiques avec au moins un conducteur suffisamment souple pour ne pas gêner la libre rotation de l'organe de mesure autour de son axe, ou, dans le cas où cet axe comprend au moins un roulement, au moyen du passage d'un courant électrique à travers ce roulement.

Les moyens de transmission de l'information captée par le dispositif peuvent faire appel à la source d'énergie évoquée précédemment. Dans le cas où cette information est transmise vers l'engin, ils peuvent faire appel au même moyen de transmission que cette source d'énergie.

L'utilisation du dispositif concerne de façon préférée un aéronef, avec ou sans moteur, le fluide étant l'air. Il va de soi que les dimensions, la technologie et les matériaux utilisés pour la construction du dispositif seront adaptés aux conditions de vol: pour un planeur on choisira le bois ou une matière plastique, pour un avion de ligne ou une fusée sans pilote une structure métallique sera préférable. Ceci n'affecte en rien le principe de l'invention.

Dans une autre réalisation de l'invention, notamment en soufflerie, l'engin est fixe et le fluide s'écoule autour de l'engin dans des conditions constantes qu'on cherche à mesurer. Dans cette utilisation, le support n'est pas forcément fixé sur l'engin mais peut être déplacé autant qu'on le désire dans le tunnel de la soufflerie, en mesurant à chaque position l'angle entre la direction du fluide et la verticale, qui coïncide ici avec la direction apparente de la pesanteur puisque le dispositif est fixe.

Une autre utilisation du dispositif concerne une voiture de course automobile, soumise elle aussi à des forces d'accélération, de portance et de traînée. Le dispositif peut servir à optimiser la forme et la disposition des ailerons, becquets et spoilers, sur circuit ou en soufflerie, pour en améliorer les performances.

Une autre utilisation du dispositif est caractérisée en ce qu'un clinomètre solidaire de l'engin, situé dans son enveloppe et donc non soumis aux influences fluide-dynamiques, permet, par différence d'angle, de calculer l'angle entre le dispositif et l'engin indépendamment de l'accélération de l'engin. Ceci concerne par exemple la mesure précise de l'angle d'attaque de l'engin dans le fluide. En installant dans l'engin un capteur similaire mesurant de façon analogue et aussi précise l'angle entre l'axe de roulis de l'engin et la direction de la résultante des forces de portance, de traînée et éventuellement de poussée s'exerçant sur l'engin, l'invention permet aussi de calculer par différence l'angle d'attaque avec une très grande précision.

Une autre utilisation du dispositif concerne un engin sous-marin, le fluide étant un liquide et plus particulièrement de l'eau.

Dans d'autres utilisations du dispositif, un processeur, embarqué ou non à bord de l'engin, reçoit l'information transmise par les moyens de transmission et la convertit en un signal facile à interpréter pour l'optimisation du déplacement, c'est-à-dire du rapport entre les forces de portance, de traînée et éventuellement de poussée. Si cette tâche d'optimisation est confiée à un opérateur, par exemple un pilote, ce signal peut être affiché par des moyens visuels mais peut aussi par exemple être acoustique, ce qui lui permet d'effectuer simultanément d'autres tâches nécessitant un contact visuel.

D'autres dispositifs sont prévus pour maintenir des conditions de bon fonctionnement du clinomètre: si l'engin vole en haute atmosphère où prévalent des températures extrêmes, ou évolue à de grandes profondeurs où règnent de fortes pressions, la source d'énergie pourra également servir à le maintenir à sa température et sa pression normale de fonctionnement.

D'autres caractéristiques et avantages de l'invention apparaîtront dans la description détaillée ci-après d'une réalisation de l'invention, par référence aux dessins annexés dans lesquels:
- la figure 1 donne un aperçu de l'aéronef, de ses axes, et des vecteurs et forces intervenant dans son aérodynamique;
- la figure 2 représente le dispositif et son support;
- la figure 3 montre une réalisation du circuit électrique qui alimente le clinomètre et en capte les mesures.

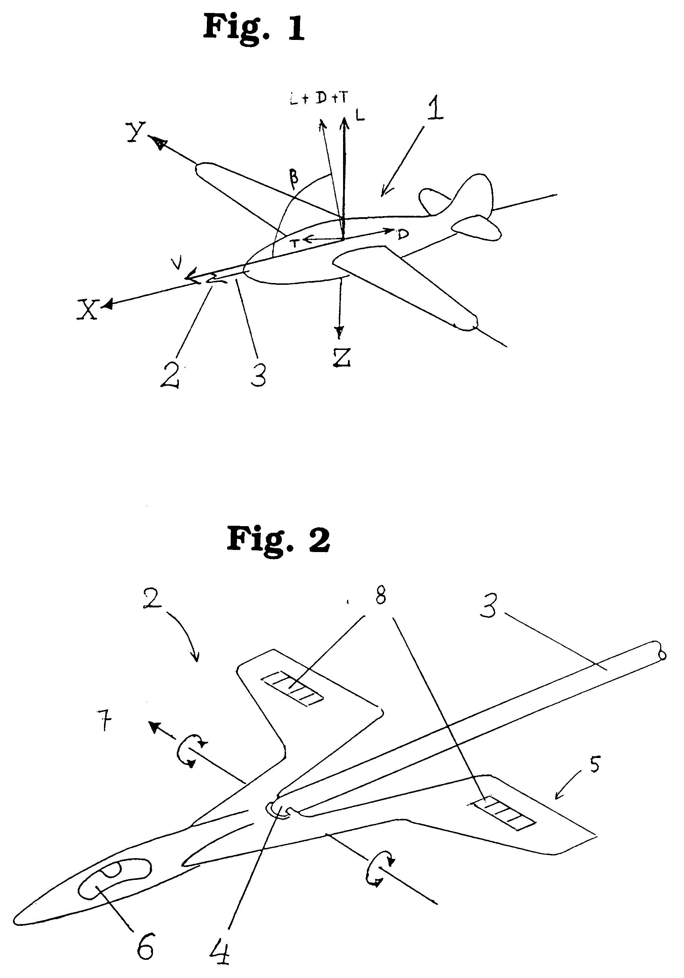

La figure 1 représente un aéronef 1 muni d'un support 3 portant le dispositif 2. Le support 3 est approximativement parallèle à l'axe de roulis X de l'aéronef et a été placé sur le nez de l'aéronef, c'est-à-dire en un endroit protégé des influences causées dans la masse d'air par le mouvement de l'avion. Elle montre le vecteur vitesse V et la résultante de la portance L, de la traînée D et de la poussée T, avec l'angle β qui est à mesurer avec une grande précision.

La figure 2 montre le détail de la réalisation préférée du dispositif 2, monté mobile autour d'un axe 7 parallèle à l'axe de tangage Y de l'aéronef 1. L'axe 7 est matérialisé par un palier 4 à faible friction placé à l'extrémité du support 3. Le dispositif 2 a une forme qui le rend apte à s'orienter dans la direction du vecteur vitesse de l'engin. Il comporte à cet effet des ailettes 5. Le centre de gravité du dispositif 2 est situé par construction au centre du palier 4. Un clinomètre 6, par exemple un appareil commercialisé sous le nom de "Subminiature inclinometer" par Spectron Glass and Electronics Inc. (Uniondale, N.Y. 11553, U.S.A.) est incorporé dans le dispositif 2. Il mesure, dans le plan contenant l'axe de roulis X et l'axe de lacet Z, l'angle β que fait la projection sur ce plan du vecteur vitesse avec la projection sur ce même plan de la direction de la force obtenue comme résultante géométrique des forces s'exerçant sur l'aéronef, à l'exception de la force de gravitation. Ces forces comprennent la portance et la traînée dans le cas d'un planeur, et en plus la poussée dans le cas d'un avion propulsé. Comme les conditions de vol sont fonction de cet angle, on pourra à tout moment optimiser le vol. En particulier, dans le cas d'un avion propulsé, la consommation de carburant peut être réduite en agissant de manière connue sur divers paramètres tels que la position des volets, des ailerons, et du centre de gravité de l'avion par prélèvement du carburant dans un réservoir avant ou arrière. Les moyens (non représentés) utilisés pour transmettre, par exemple à un processeur, l'information utile à l'optimisation du vol sont situés dans l'enveloppe du dispositif 2 et sont alimentés par un ensemble de capteurs solaires 8 intégrés aux ailettes 5. La position de la bulle du clinomètre 6 est convertie sous forme électrique avec l'aide de cette source et transmise à l'engin par exemple à travers le palier 4 et le support 3.

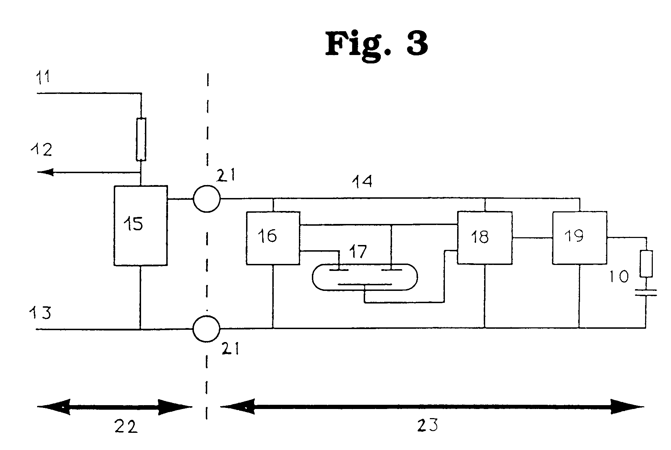

Dans la figure 3 est représentée l'électronique convertissant l'information captée par le clinomètre dans la réalisation préférée de l'invention. L'angle β est mesuré et converti en un signal électrique 12 oscillatoire, et le nombre d'oscillations est compté puis interprété par un microprocesseur. A une fréquence des oscillations correspond un angle.
L'alimentation de 3 Volts est réalisée à travers des roulements à billes conducteurs 21 matérialisant l'axe séparant l'engin et le support, occupant la partie gauche de la figure 3, de l'organe de mesure dont l'électronique est schématisée dans la partie droite de la figure 3. Un circuit intégré régulateur 15 délivre une tension stabilisée de 3 Volts. La consommation en courant de l'électronique du dispositif est approximativement constante, ce qui permet d'utiliser la modulation du courant pour communiquer l'angle β mesuré par le capteur 17. Ce capteur, constitué par un clinomètre électrolytique 17, est excité à 10 kHz avec un cycle de charge de 50%. L'excitation est réalisée en commutant de façon alternée les électrodes de commande du capteur 17 entre 0 et 3 Volts. Le cycle de charge de 50% est assuré par un composant 16 représentant un circuit multivibrateur CMOS 4047. L'information captée est lue par l'électrode centrale du capteur 17. Comme, à un angle donné, la différence de tension reste constante par rapport aux électrodes de commande, qui subissent en permanence une inversion de polarité, un circuit d'échantillonnage et de maintien 18 est utilisé pour fournir à un composant 19, représentant un oscillateur commandé par tension et constitué par un CMOS 4046, la tension lue pendant la première moitié du cycle. L'oscillateur commandé par tension 19 est réglé pour fournir une fréquence de l'ordre de 1 kHz. Chaque changement de polarité de la sortie produit une impulsion de courant dans l'élément résistance-capacité 10, résultant en une oscillation de tension détectable via une résistance entre l'alimentation 11 de 5 Volts et la sortie oscillatoire 12. Cette sortie communique avec un processeur servant à l'optimisation.

## Revendications

1. Dispositif permettant de mesurer l'angle (β) entre la direction apparente de la pesanteur (L+D+T) et la direction du vecteur vitesse (V) de ce dispositif par rapport à un fluide dans lequel il est immergé, **caractérisé** en ce que ce dispositif
- est fixé sur un support (3), ce support étant muni d'un axe (7)
qui passe par le centre de gravité du dispositif et qui est maintenu orthogonal par rapport au plan contenant
le vecteur vitesse apparente du fluide par rapport au dispositif et la direction apparente de la pesanteur,
- est libre de tourner autour de cet axe (7) et comporte une seule position, autour de cet axe (7), où le moment résultant des forces fluide-dynamiques est nul et ou il est donc fluide-dynamiquement stable,
- comprend un organe de mesure comprenant au moins un clinomètre (6) pour la mesure de cet angle et des moyens de transmission de l'information captée par ce ou ces clinomètres.

2. Dispositif selon la revendication 1, caractérisé en ce que le ou les clinomètres (6) sont des niveaux à bulle de gaz.

3. Dispositif selon les revendications 1 ou 2, caractérisé par une forme aérodynamique comportant une paire d'ailettes (5) stabilisant sa position.

4. Dispositif selon une des revendications 1 à 3, caractérisé en ce que le support (3) est placé sur un engin dans une position peu perturbée ou subissant des perturbations connues.

5. Dispositif selon une des revendications 1 à 4, caractérisé en ce que le support (3) est de direction réglable par asservissement pour mieux maintenir l'orthogonalité de l'axe (7) et minimiser ainsi les perturbations liées aux phases transitoires.

6. Dispositif selon une des revendications 1 à 5, caractérisé en ce que le dispositif tourne autour de l'axe (7) avec une faible friction.

7. Utilisation du dispositif selon une des revendications 1 à 6, caractérisée en ce que l'angle mesuré est celui existant entre la direction de la résultante des forces de portance, de traînée et éventuellement de poussée exercées sur un engin sur lequel est fixé le support du dispositif, et la direction du vecteur vitesse relative de ce support par rapport au fluide.

8. Utilisation du dispositif selon une des revendications 1 à 6, caractérisée en ce que le fluide est pulsé dans un tunnel de soufflerie et que le support est fixe et permet de déterminer la direction de l'écoulement du fluide en un point donné du tunnel de soufflerie.

9. Utilisation du dispositif selon une des revendications 1 à 6, caractérisée en ce qu'un clinomètre supplémentaire solidaire de l'engin permet par soustraction de calculer l'angle entre le dispositif et l'engin, indépendamment de l'accélération de l'engin.

10. Utilisation du dispositif selon une des revendication 1 à 6, caractérisée en ce qu'un processeur reçoit l'information transmise par les moyens de transmission et la convertit en un signal facile à interpréter par exemple pour l'optimisation du rapport portance/traînée.

## Patentansprüche

1. Gerät zur Bestimmung des Winkels zwischen der Scheinlotlinie (L+D+T) und dem Geschwindigkeitsvektor von dem Gerät relativ zur umgebenden Flüssigkeit, dadurch gekennzeichnet, dass das Gerät
- auf einen Halter (3) befestigt ist, welcher mit einer Rotationsachse (7) versehen ist,
dass diese Rotationsachse durch das Massenzentrum von dem Gerät geht,
dass diese Rotationsachse immer orthogonal bezüglich einen Plan, der vom Umgebungsflüssigkeitsrelativgeschwindigkeitsvektor und von der Scheinlotlinie definiert ist,
dass das Gerät weiter
- sich frei um die Rotationsachse drehen kann und nur eine Position um diese Rotationsachse hat, wo das Gerät aerodynamisch stabil ist, das heisst, wo der Resultantmoment von den aerodynamischen Kräften Null ist,
- ein Messystem hat, das mindestens ein Inklinometer (6) einschliesst, um diesen Winkel zu messen, und Mittel zur Ueberführung von Inklinometerdaten.

2. Gerät nach Anspruch 1, dadurch gekennzeichnet, dass die Inklinometer (6) Flüssigkeitsmeter sind.

3. Gerät nach einem der Ansprüche 1 und 2, dadurch gekennzeichnet, dass das Gerät eine aerodynamische Form hat und mit Stabilisierungsflächen ausgerüstet ist.

4. Gerät nach einem der Ansprüche 1 bis 3, dadurch gekennzeichnet, dass der Halter (3) auf ein Flugzeug montiert ist, auf eine Stelle wo Störungen klein oder bekannt sind.

5. Gerät nach einem der Ansprüche 1 bis 4, dadurch gekennzeichnet, dass der Halter (3) einen regulierbaren Befestigungsmechanismus hat, um besser die Orthogonalität von der Rotationsachse (7) beizubehalten, und deshalb vorübergehende Störungen reduziert.

6. Gerät nach einem der Ansprüche 1 und 5, dadurch gekennzeichnet, dass die Rotationsachse (7) ein niedriger Rotationswiderstand hat.

7. Anwendung von dem Gerät nach einem der Ansprüche 1 bis 6, dadurch gekennzeichnet, dass der gemessene Winkel der Winkel zwischen a) der Resultante von Auftriebskräften, Widerstandskräften und eventuell Triebkräften auf ein Flugzeug, auf welchem der Halter montiert ist, und b) dem Relativgeschwindigkeitsvektor des Halters in die Umgebungsflüssigkeit ist.

8. Anwendung von dem Gerät nach einem der Ansprüche 1 bis 6, dadurch gekennzeichnet, dass die Flüssigkeit ein Gas, das durch einen Windkanal gebläst wird ist, dass der Halter (3) stationär ist und deshalb erlaubt, die Gasstromrichtung an einer gegebener Stelle im Kanal zu messen.

9. Anwendung von dem Gerät nach einem der Ansprüche 1 bis 6, dadurch gekennzeichnet, dass ein zusätzlicher Inklinometer auf das Flugzeug montiert ist, so dass durch Subtraktion der Winkel zwischen dem Gerät und dem Flugzeug berechnet werden kann, unabhängig von der aktuellen Beschleunigung.

10. Anwendung von dem Gerät nach einem der Ansprüche 1 bis 6, dadurch gekennzeichnet, dass ein Prozessor die von den Mitteln überführte Daten empfängt via ein Datenübertragungskanal, und davon ein einfach zu verstehen Signal bearbeitet, zum Beispiel zur Optimierung von dem Auftrieb/Widerstandsverhältnis der Flugzeug.

## Claims

1. Device permitting the measurement of the angle between the apparent direction of the plumb line (L+D+T) and the velocity vector of the device relative to the fluid in which it is immerged, characterised in that the device
- is fixed on support (3), this support being equipped with an axis (7) which passes through the center of gravity of the device and which is maintained orthogonal to the plane defined by the apparent velocity of the fluid flowing around the device and the apparent plumb line,
- is free to rotate around this axis and has one single position, around this axis, where the resultant moment from the fluid dynamic forces is zero and where it is fluid-dynamically stable,
- contains a measurement system including at least one inclinometer (6) to measure this angle and means to transmit the information collected by the inclinometer(s).

2. Device according to the claim 1, characterized in that the inclinometers (6) are liquid level meters.

3. Device according to the claims 1 or 2, characterized in that it has an aerodynamic shape with a pair of fins stabilizing its position.

4. Device according to one of the claims 1 to 3, characterized in that the support (3) is placed on a vehicle at a place with small perturbances or with known perturbances.

5. Device according to one of the claims 1 to 4, characterized in that the support (3) has an adjustable direction using a servo mechanism to better maintain the orthogonality of the axis (7) and hence minimize perturbances related to transitional phases.

6. Device according to one of the claims 1 to 5, characterized in that the device rotates around the axis (7) with little friction.

7. Use of the device according to one of the claims 1 to 6, characterized in that the angle measured is the angle between the resultant of the lift, drag, and eventual thrust forces acting on a vehicle on which the device's support is attached, and the velocity vector of this support relative to the fluid.

8. Use of the device according to one of the claims 1 to 6, characterized in that the fluid is moving in a wind tunnel, that the support is fixed, and hence permits the determination of the fluid flow at a specific point in the wind tunnel.

9. Use of the device according to one of the claims 1 to 6, characterized in that an additional inclinometer attached to the vehicle permits by subtraction the calculation of the angle between the device and the vehicle, independently of the acceleration of the vehicle.

10. Use of the device according to one of the claims 1 to 6, characterized in that a processor receives the information transmitted by the means of transmission and converts it into a signal easy to interpret, for example for the optimization of the lift/drag ratio of the vehicle.
